# EUROPEAN PATENT APPLICATION

(11) **EP 0 524 915 A1**
(43) Date of publication of application: **27.01.1993**
(21) Application number: 92830376.7
(22) Date of filing: 14.07.1992
(51) Int. Cl.: B60T 1/06, B60B 37/10

(54) **Wheel support with a suspension having transversal oscillating arms, for motor vehicles**

(30) Priority: 24.07.1991 IT TO910584
(71) Applicant: FIAT AUTO S.p.A., I-10135 Torino (IT)
(72) Inventor: Gandiglio, Romolo, I-10020 Cambiano (Torino) (IT)
(74) Representative: Bosotti, Luciano

(57) **Abstract**

A wheel support comprises a body (2) formed with an upper mounting (7) and a lower mounting (8) for connection to respective suspension transversal oscillating arms, (A,B) an annular plate (3) which is fixed to the body (2) and to which is fixed a tubular hub (4) containing a rolling bearing (23), and a mounting of generally circular form (5) formed in one piece with an annular flange (31) for the fixing of the wheel (R), with an annular brake disc (32) cooperating with a brake caliper (22) carried by the annular plate (3), and with a central spindle (27) supported rotatably within the tubular hub (4) by means of the rolling bearing (23).

## Description

The present invention generally relates to wheel supports for motor vehicles.

More particularly, the invention aims to provide a support. for wheels having a suspension with transver sal oscillating arms and which is of a robust, compact and cheap design.

The wheel support according to the invention is essentially characterised in that it comprises:
- a body formed in a single piece with an upper mounting and a lower mounting for the articulation of the control arms of the suspension, the body being provided laterally with a flat annular surface which faces the wheel coaxially,
- an annular plate fixed preferably by screws to the flat annular surface of the body and functioning as a support for a brake caliper, a tubular hub which carries internally a rolling bearing being fixed coaxially to the plate and projecting from the side opposite the body,
- a mounting of generally circular shape formed in a single piece with a peripheral annular flange having holes for the fixing of the wheel, with an annular brake disc, and with a central spindle supported rotatably within the tubular hub by means of the rolling bearing.

By virtue of this arrangement, the wheel support according to the invention consists of an essential number of components, of which the body may be advantageously produced by the forging of aluminium or its alloys, while the annular plate and the tubular hub are preferably of steel. The circular mounting combines in one single piece three elements (the fixing flange, the brake disc and the spindle) which traditionally, in wheel supports according to the prior art, consist at least partially of different components.

The invention will now be described in detail with reference to the appended drawings which are provided purely by way of non-limitative example and in which:

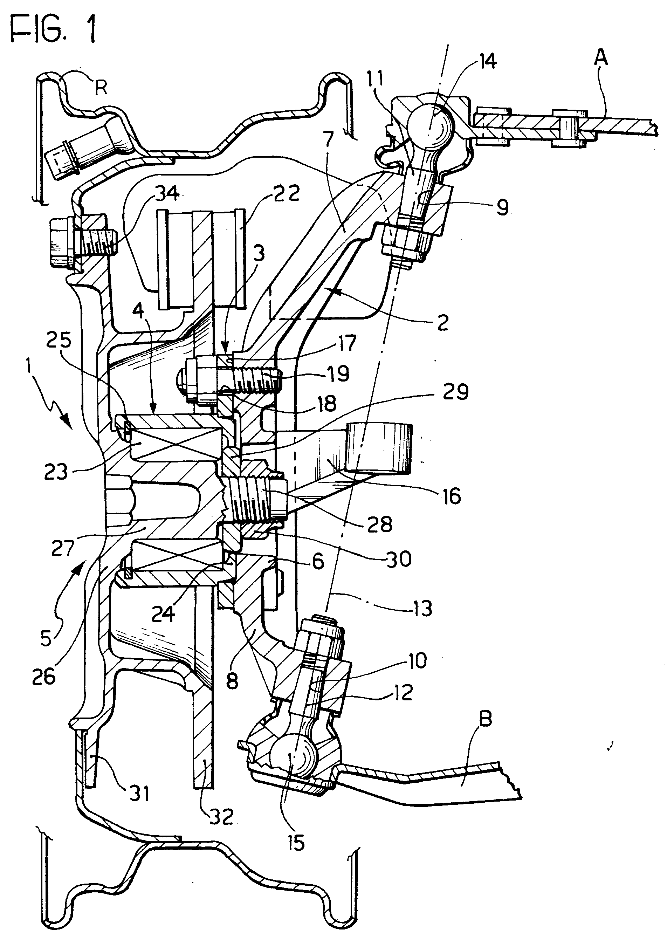

Figure 1 is a schematic vertical section through a wheel support according to the invention and
Figure 2 is an exploded perspective view of a part of the wheel support.

With reference to the drawings, a motor-vehicle wheel, schematically indicated R, is associated with a suspension device having upper and lower control arms, A and B respectively. In the case of the example illustrated, the upper arm A consists of an end of a transverse leaf spring constituting the resilient suspension member for the wheel R and for another wheel (not illustrated) disposed on the other side of the vehicle. In the example, the wheels are front wheels and are steered.

The connection between the wheel R and the suspension arms A, B is achieved by a wheel support, generally indicated 1, constituted essentially by three components: a body 2, a plate 3 with a tubular hub 4, and a mounting element 5.

The body 2, which is conveniently produced by the forging of aluminium or its alloys, has a central annular part 6 from which extend, in a single piece, an upper mounting 7 and a lower mounting 8 formed at their free ends with bores 9, 10 for the engagement of respective pins 11, 12 aligned on a common axis 13 and carrying joints 14, 15 for connection of the upper control arm A and the lower control arm B respectively.

The body 2 is also formed in a single piece with a substantially horizontal arm 16 for articulation to the kinematic steering mechanism of the wheel R.

The annular central part 6 of the body 2 has, on the side which faces the wheel R, an annular flat surface 17 against which bears the annular plate 3, the latter having a series of bores 18 for engagement of axial screws 19 by means of which the plate 3 is fixed to the body 2.

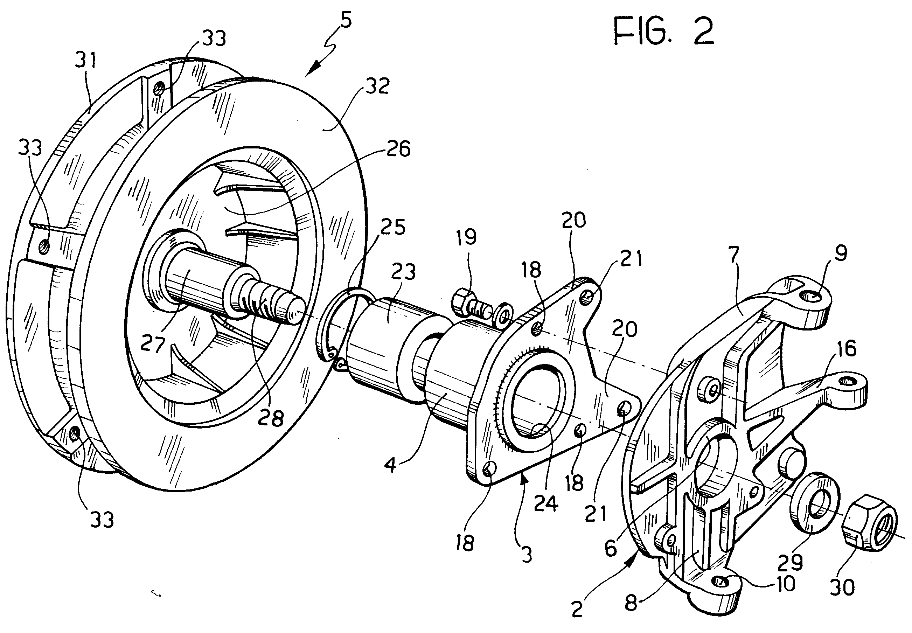

As can be seen more clearly in Figure 2, the plate 3 has at the front two projections 20 provided with respective bores 21 through which pass the studs that allow sliding of a brake caliper, generally indicated 22. Therefore, the caliper 22 is supported directly by the plate 3.

The tubular hub 4 is fixed at one end, conveniently by laser welding, to the inner perimetral edge of the annular flange 3 and projects therefrom in the opposite direction to the body 2. Inside the tubular hub 2 is inserted a rolling bearing 23 which is supported axially at one end by an inner, radial annular collar 24 formed integrally with the hub 4 and at the opposite end by an inner retaining ring 25.

The mounting 5 consists of a single piece of generally circular form with a central part 26 from which extends in the direction of the body 2 a cylindrical pin 27 ending in a screw-threaded tang 28. The pin 27 constitutes the spindle of the wheel R and is supported for rotation within the tubular hub 4 by the rolling bearing 23. The bearing 23 is retained axially by means of a ring nut 29 and a locking nut 30 screwed onto the screw-threaded tang 28.

Projecting form the central part 26 of the mounting 5 are two peripheral rings 31, 32, both formed integrally with the mounting 5. The ring 31, that is, the one which is towards the outer side of the support 1, has a series of screw-threaded axial holes 33 for the engagement of screws 34 for fixing the wheel R.

The other ring 32, the outer diameter of which is substantially equal to that of the ring 31, constitutes a brake disc adapted to cooperate with the brake caliper 22 carried by the plate 3.

Naturally, the details of construction and forms of embodiments may be varied widely in comparison with what has been described and illustrated, without thereby departing from the scope of the present invention.

## Claims

1. A motor-vehicle wheel support having a suspension with transversal oscillating arms, characterised in that it comprises:
- a body (2) formed in a single piece with an upper mounting (7) and a lower mounting (8) for the articulation (14, 15) of the oscillating arms (A, B) of the suspension, the body (2) being provided laterally with a flat annular surface (17) which faces the wheel (R) coaxially,
- an annular plate (3) fixed by screws (19) to the flat annular surface (17) of the body (2) and functioning as a support for a brake caliper (22), a tubular hub (4) which carries internally a rolling bearing (23) being fixed coaxially to the plate (3) and projecting from the side opposite the body (2),
- a mounting of generally circular shape (5) formed in a single piece with a peripheral annular flange (31) having holes (33) for the fixing of the wheel (R), with an annular brake disc (32), and with a central spindle (27) supported rotatably within the tubular hub (4) by means of the rolling bearing (23).

2. A wheel support according to Claim 1, characterised in that the annular plate (3) is formed with a pair of projections (20) provided with respective bores (21) for retaining the brake caliper (22).
